# EUROPÄISCHE PATENTANMELDUNG

(11) **EP 4 497 309 A1**
(43) Veröffentlichungstag der Anmeldung: **29.01.2025**
(21) Anmeldenummer: 24152218.4
(22) Anmeldetag: 16.01.2024
(51) Int. Cl.: A01B 69/04, A01B 79/00, A01D 34/00, A01D 41/127

(54) **ROUTENPLANUNGSSYSTEM EINER ERNTEPROZESSKETTE**

(30) Priorität: 25.07.2023 DE 102023119546
(71) Anmelder: CLAAS Selbstfahrende Erntemaschinen GmbH, 33428 Harsewinkel (DE)
(72) Erfinder: Mümken, Philipp, 88400 Biberach an der Riß (DE); Fischer, Josef, 88400 Biberach (DE); Reinhardt, Martin, 88367 Hohentengen (DE); Schmid, Christian, 88696 Owingen (DE); Rupp, Magnus, 73494 Rosenberg (DE); Pflanze, Sascha, 88348 Bad Saulgau (DE); Mock, Andreas, 88284 Wolpertswende (DE); Ober, Martin, 78736 Trichtingen (DE); Oldenburg, Joachim, 33428 Harsewinkel (DE); Fugunt, Michael, 88410 Bad Wurzach (DE); Thiesmann, Waldemar, 49080 Osnabrück (DE); Becker, Michael, 88367 Hohentengen (DE)
(74) Vertreter: CLAAS 365FarmNet GmbH

(57) **Zusammenfassung**

Die Erfindung betrifft ein Routenplanungssystem (50) welches vorgesehen und eingerichtet ist, den Routenplan (51a,b) einer Futterernteprozesskette (13) zu erstellen, wobei die Futterernteprozesskette (13) eine Vielzahl landwirtschaftlicher Arbeitsmaschinen (31) umfasst, welche in einer vorgegebenen Reihenfolge einen Futterernteprozess (1) durchführen, wobei der Futterernteprozess (1) aufeinanderfolgende Prozessschritte (2) umfasst und jeder Prozessschritt (2) von einer Anzahl der Vielzahl von landwirtschaftlichen Arbeitsmaschinen (31) durchgeführt wird und das Routenplanungssystem (50) weiter vorgesehen und eingerichtet ist, für die landwirtschaftlichen Arbeitsmaschinen (31) der Futterernteprozesskette (13) einen gemeinsamen Routenplan (51a, 51b, 52) und/oder für jede landwirtschaftliche Arbeitsmaschine (31) einen individualisierten Routenplan (51a, 51b, 53) zu generieren

## Beschreibung

Die Erfindung betrifft ein Routenplanungssystem welches eingerichtet ist, den Routenplan einer Futterernteprozesskette zu erstellen, nach dem Oberbegriff des Anspruchs 1.

Aus der EP 3 314 997 B1 ist ein Erntemanagementsystem bekannt geworden, welches mittels geeigneter Sensoren die Feuchte eines zu erntenden Futterbestandes überwacht und in Abhängigkeit von der detektierten Gutfeuchte nachgeordnete Ernteprozessschritte regelt. Im Einzelnen ist dort offenbart, dass in Abhängigkeit von der detektierten Gutfeuchte das sogenannte Zetten oder Wenden des auf dem Feld abgelegten Erntegutes gesteuert wird. Zudem ist beschrieben, dass das geerntete Gut erst ab einer bestimmten Feuchtigkeit mittels Ballenpressen geerntet und in Ballen verpresst wird. Ein derartiges System hat zumindest den Vorteil, dass einzelne Schritte eines Futterernteprozesses in Abhängigkeit von der detektierten Gutfeuchte gesteuert werden können.

Vor dem Hintergrund, dass die einzelnen Ernteprozessschritte einer Futterernteprozesskette von ganz unterschiedlichen landwirtschaftlichen Arbeitsmaschinen gleichzeitig auf einem zu bearbeitenden Territorium oder zu ganz unterschiedlichen Zeitpunkten auf demselben Territorium ausgeführt werden ist es von großer Bedeutung, dass die Zusammenarbeit der eingesetzten landwirtschaftlichen Arbeitsmaschinen so aufeinander abgestimmt wird, dass die landwirtschaftlichen Arbeitsmaschinen zeitlich und geografisch in der richtigen Reihenfolge eingesetzt werden und zudem bei gleichzeitigem Einsatz keine Kollisionen zwischen diesen auftreten. Zudem wäre es von Vorteil, wenn im Sinne einer bodenschonenden Bearbeitung wenig Überfahrten des zu bearbeitenden Territoriums realisiert werden.

Aus dem Stand der Technik sind verschiedenste Routenplanungssysteme bekannt geworden, die das Zusammenarbeiten mehrere landwirtschaftlicher Arbeitsmaschinen auf einem zu bearbeitenden Territorium beschreiben. Beispielhaft sei hier auf die DE 10 2006 015 204 A1 verwiesen, in welcher die Zusammenarbeit von landwirtschaftlichen Erntemaschinen, hier Mähdrescher, auf einem zu bearbeitenden Territorium offenbart ist. Die landwirtschaftlichen Arbeitsmaschinen generieren einen gemeinsam abzuarbeitenden Routenplan, wobei sichergestellt werden soll, dass jeder Bereich des zu bearbeitenden Territoriums von jeweils nur einer Maschine bearbeitet wird. Derartige System haben den Nachteil, dass sie stets nur gleichzeitig in einem Territorium eingesetzte Arbeitsmaschinen berücksichtigen können und zudem vermieden wird, dass die zusammenarbeitenden landwirtschaftlichen Arbeitsmaschinen denselben Bereich des zu bearbeitenden Territoriums bearbeiten.

Es ist deshalb Aufgabe der Erfindung die beschriebenen Nachteile des Standes der Technik zu vermeiden und insbesondere ein Routenplanungssystem vorzuschlagen, welches die komplexen Zusammenhänge eines Futterernteprozesses besser berücksichtigt und sicherstellt, dass die in eine Futterernteprozesskette integrierten landwirtschaftlichen Arbeitsmaschinen auf einem zu bearbeitenden Territorium aufeinander abgestimmt agieren.

Diese Aufgabe wird erfindungsgemäß durch die kennzeichnenden Merkmale der Ansprüche 1 und 18 gelöst.

Indem ein Routenplanungssystem vorgesehen und eingerichtet ist, den Routenplan einer Futterernteprozesskette zu erstellen, wobei die Futterernteprozesskette eine Vielzahl landwirtschaftlicher Arbeitsmaschinen umfasst, welche in einer vorgegebenen Reihenfolge einen Futterernteprozess durchführen, wobei der Futterernteprozess aufeinanderfolgende Prozessschritte umfasst und jeder Prozessschritt von einer Anzahl der Vielzahl von landwirtschaftlichen Arbeitsmaschinen durchgeführt wird und das Routenplanungssystem weiter vorgesehen und eingerichtet ist, für die landwirtschaftlichen Arbeitsmaschinen der Futterernteprozesskette einen gemeinsamen Routenplan und/oder für jede landwirtschaftliche Arbeitsmaschine einen individualisierten Routenplan zu generieren, wird sichergestellt, dass die in eine Futterernteprozesskette integrierten landwirtschaftlichen Arbeitsmaschinen auf einem zu bearbeitenden Territorium aufeinander abgestimmt agieren.

In einer vorteilhaften Ausgestaltung der Erfindung ist vorgesehen, dass das Routenplanungssystem den gemeinsamen Routenplan und den für jede landwirtschaftliche Arbeitsmaschine generierten individualisierten Routenplan dynamische anpasst. Dies hat insbesondere den Effekt, dass die Fahrtrouten der landwirtschaftlichen Arbeitsmaschinen flexibel an sich ändernde Bedingung auf dem zu bearbeitenden Territorium angepasst werden können.

Eine weitere vorteilhafte Ausgestaltung der Erfindung sieht vor, dass das Routenplanungssystem für die landwirtschaftlichen Arbeitsmaschinen eines Prozessschritts der Futterernteprozesskette einen gemeinsamen Routenplan und/oder für jede landwirtschaftliche Arbeitsmaschine einen individualisierten Routenplan zu generieren. Auf diese Weise wird sichergestellt, dass alle in ein und denselben Prozessschritt einer Futterernteprozesskette involvierten landwirtschaftlichen Arbeitsmaschinen effizient und kollisionsfrei auf dem zu bearbeitenden Territorium agieren.

Indem das Routenplanungssystem für die landwirtschaftlichen Arbeitsmaschinen aller Prozessschritte der Futterernteprozesskette einen gemeinsamen Routenplan und/oder für jede landwirtschaftliche Arbeitsmaschine einen individualisierten Routenplan generiert wird zudem sichergestellt, dass prozessschrittübergreifend für die komplette Futterernteprozesskette ein übergreifender Routenplan für alle involvierten landwirtschaftlichen Arbeitsmaschinen erstellt wird. Auf diese Weise werden Wechselwirkungen zwischen allen in die Futterernteprozesskette integrierten landwirtschaftlichen Arbeitsmaschinen besser berücksichtigt und zudem kann sehr flexibel auf sich ändernde Randbedingungen reagiert werden.

In einer vorteilhaften Weiterbildung der Erfindung umfassen die gemeinsamen Routenpläne und die individualisierten Routenpläne Fahrtrouten, wobei jeder landwirtschaftlichen Arbeitsmaschine in dem jeweiligen Routenplan eine individualisierte Fahrtroute zugeordnet ist. Dies hat insbesondere den Effekt, dass die individualisierte Fahrroute unmittelbar zur automatisierten oderteilautomatisierten Lenkung der jeweiligen landwirtschaftlichen Arbeitsmaschine in an sich bekannter Weise genutzt werden kann.

In einer weiteren vorteilhaften Ausgestaltung der Erfindung wird die Futterernteprozesskette von einem Assistenzsystem generiert und an das Routenplanungssystem übergeben, wobei das Assistenzsystem die Futterernteprozesskette aus einer an das Assistenzsystem übergebenen Beschreibung einer landwirtschaftlichen Arbeitsaufgabe erstellt. Dies hat insbesondere den Effekt, dass der zu generierende Routenplan ganz spezifisch an die in der landwirtschaftlichen Arbeitsaufgabe definierten Tätigkeiten adaptiert werden kann.

In diesem Zusammenhang ist es auch von Vorteil, wenn der zu optimierende Futterernteprozess als landwirtschaftliche Arbeitsaufgabe beschrieben wird und die Beschreibung der landwirtschaftliche Arbeitsaufgabe die erforderlichen Prozessschritte und die Reihenfolge ihrer Abarbeitung umfasst, wobei die Reihenfolge der Abarbeitung der Prozessschritte die jeweilige Futterernteprozesskette bildet und wobei das Routenplanungssystem vorgesehen und eingerichtet ist einen Routenplan für einen Prozessschritt und/oder einen Routenplan für mehrere oder alle Prozessschritte zu erstellen.

In einer weiteren vorteilhaften Ausgestaltung der Erfindung ist vorgesehen, dass die auf einem zu bearbeitenden Territorium aktiven landwirtschaftlichen Arbeitsmaschinen jeweils über eine Datenübertragungseinrichtung verfügen und die Datenübertragungseinrichtungen vorgesehen und eingerichtet sind einen Datenaustausch zwischen den landwirtschaftlichen Arbeitsmaschinen und dem Routenplanungssystem zu ermöglichen. Die hat insbesondere den Effekt, dass die dynamische Anpassung der Routenpläne und zugehörigen Fahrtrouten zeitnah zum auslösenden Ereignis erfolgt.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Darstellung eines Futterernteprozesses
- Figur 2: eine schematische Darstellung des erfindungsgemäßen Assistenzsystems
- Figur 3: eine schematische Darstellung des Zusammenhangs zwischen Futterernteprozess und Assistenzsystem
- Figur 4a: eine schematische Darstellung des erfindungsgemäßen Routenplanungssystems
- Figur 4b: ein Flussdiagramm zur Arbeitsweise des erfindungsgemäßen Routenplanungssystems
- Figur 5: eine Detailstruktur des erfindungsgemäßen Routenplanungssystems
- Figur 6: eine schematische Darstellung der Routenplanerstellung

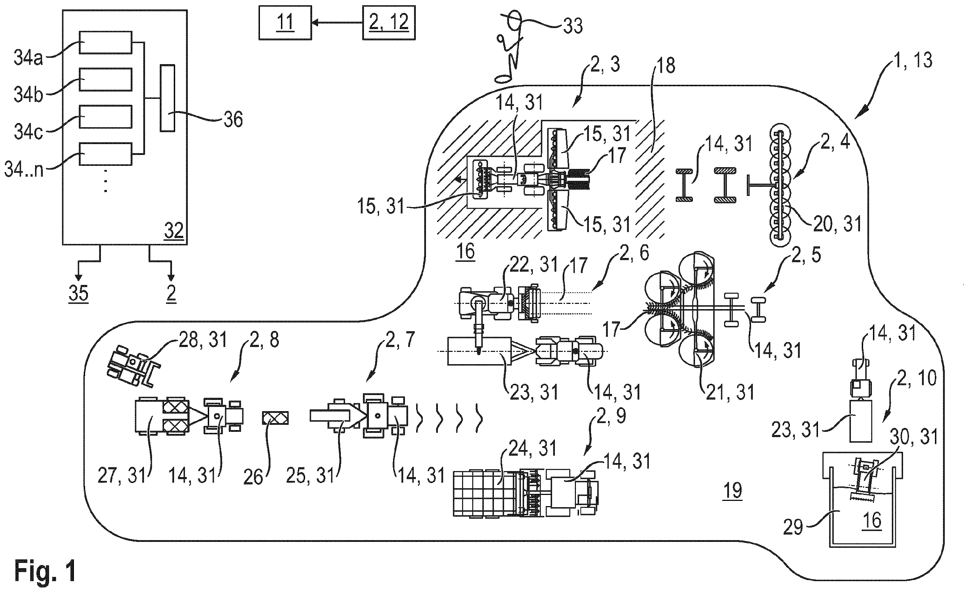

Fig. 1 zeigt schematisch einen Futterernteprozess 1, wobei der dargestellte Futterernteprozess 1 eine Vielzahl noch näher zu beschreibender Prozessschritte 2 umfasst. Im Einzelnen sind die Prozessschritte 2 Mähen 3, Wenden oder Zetten 4, Schwaden 5, Schwadernte mittels Feldhäcksler 6, Schwadernte mittels Ballenpresse 7, Aufsammeln und Abtransport der Erntegutballen 8, Schwadernte mittels Ladewagen 9 und Einlagerung 10 des Ernteguts 16 dargestellt. Aus Vereinfachungsgründen sind in Figur 1 auch alternative Prozessschritte 2 dargestellt, die sich in der Praxis wechselseitig ausschließen, etwa Schwadernte mittels Feldhäcksler 6 oder Schwadernte mittels Ballenpresse 7 oder Schwadernte mittels Ladewagen 9.

Der Futterernteprozess 1 wird durch die im Folgenden noch zu erläuternde landwirtschaftliche Arbeitsaufgabe 11 beschrieben und umfasst eine anwendungsfallabhängige Auswahl von Prozessschritten 2 und die Reihenfolge ihrer Abarbeitung. Als weiterer Prozessschritt 2 kommt zudem die Entscheidung über den Erntestart 12 des Futterernteprozesses 1 in Betracht. Die die jeweilige landwirtschaftliche Arbeitsaufgabe 11 beschreibenden Prozessschritte 2 werden nachfolgend als Futterernteprozesskette 13 bezeichnet.

Im dargestellten Ausführungsbeispiel nach Figur 1 wird der Prozessschritt 2 Mähen 3 von einem Traktor 14 mit Front- und Seitenmähwerken 15 realisiert, wobei das Erntegut 16 in einem einzigen Erntegutschwad 17 abgelegt wird. Es liegt im Rahmen der Erfindung, dass das dreiteilige Mähwerk 15 auch nur als ein- oder zweiteiliges Mähwerk 15 ausgeführt ist und mehrere Erntegutschwaden 17 bilden kann. Zudem kann das Erntegut 16 im Prozessschritt 2 Mähen 3 auch in Breitablage 18 auf dem Feldboden 19 abgelegt werden.

Der Prozessschritt 2 Wenden oder Zetten 4 wird mittels einer von einem Traktor 14 gezogenen oder auf diesem aufgesattelten Heuwerbungsmaschine 20, auch als Wender oder Zetter bezeichnet, umgesetzt und ist dem Prozessschritt 2 Mähen 3 nachgeordnet, wobei in diesem Fall im Prozessschritt 2 Mähen 3 das Erntegut 16 in Breitablage 18 abgelegt wird. Der Prozessschritt 2 Wenden oder Zetten 4 wird in Abhängigkeit von der Feuchte des in Breitablage 18 abgelegten Erntegutes 16 ein oder mehrmals durchgeführt.

Wurde das Erntegut 16 in Breitablage 18 auf dem Feldboden 19 abgelegt umfasst die Futterernteprozesskette 13 den Prozessschritt 2 Schwaden 5. Im hier dargestellten Ausführungsbeispiel wird der Prozessschritt 2 Schwaden 5 von einem Traktor 14 - Schwader 21 - Gespann realisiert, wobei der Schwader 21 als Vierkreiselschwader ausgeführt ist und das Erntegut 16 in einem einzigen Erntegutschwad 17 ablegt. Denkbar ist hier aber auch der Einsatz von Ein- oder Mehrkreiselschwadern, welche das Erntegut 16 in einem oder mehreren Erntegutschwaden 17 auf dem Feldboden 19 ablegen.

In einer ersten Ausgestaltung wird der Erntegutschwad 17 von einem Feldhäcksler 22 aufgenommen, in an sich bekannter Weise zerkleinert und an einen von einem Traktor 14 gezogenen Transportwagen 23 übergeben. Alternativ kann der Erntegutschwad 17 von einem von einem Traktor 14 gezogenen Ladewagen 24 aufgenommen werden. Ladewagen 24 sind in der Regel mit einer als Pickup ausgeführten Aufsammeleinrichtung ausgestattet, können je nach Ausstattung eine Zerkleinerung des aufgenommenen Ernteguts 16 vornehmen und dieses sodann in gewissem Umfang vorverdichtet an den eigentlichen Transportbehälter übergeben. Eine weiter Alternative kann die Aufnahme des Erntegutschwades 17 durch eine von einem Traktor 14 gezogene Ballenpresse 25, hier vorzugsweise als sogenannte Quaderballenpresse ausgeführte Ballenpresse 25, sein, wobei das Erntegut 16 sodann als Erntegutballen 26 auf dem Feldboden 19 abgelegt wird. An diesen Prozessschritt 2 schließt sich in der Regel der Prozessschritt 2 Aufsammeln und Abtransport der Erntegutballen 8 an, wobei hier in der Regel von Traktoren 14 gezogene Pritschenwagen 27 und Hubstapler 28, etwa Traktoren 14 mit Frontlader oder sogenannte Teleskoplader, zum Aufnehmen und Überladen der Erntegutballen 26 zum Einsatz kommen.

Der Prozessschritt 2 Einlagerung des Erntegutes 10 kann einerseits die Einlagerung der Erntegutballen 26 umfassen. Andererseits kann das etwa von einem Transportwagen 23 oder einem Ladewagen 24 aufgenommene Erntegut 16 in einem Silo 29 eingelagert werden, wobei im dargestellten Ausführungsbeispiel ein Flachsilo gezeigt ist. Die Einlagerung 10 des Erntegutes 16 in einem Flachsilo erfolgt in der Regel in der Weise, dass der Traktor 14 gezogene Lade- oder Transportwagen 23, 24 das Erntegut 16 in das Silo 29 abgibt und dort ein Verdichtungsfahrzeug 30 das Erntegut 16 in an sich bekannter Weise durch mehrmaliges Überrollen und Zusammenschieben verdichtet.

Der jeweilige Traktor 14, das Mähwerk 15, die Heuwerbungsmaschine 20, der Schwader 21, der Feldhäcksler 22, der Transportwagen 23, der Ladewagen 24, die Ballenpresse 25, der Pritschenwagen 27, der Hubstapler 28 und das Verdichtungsfahrzeug 30 bilden die landwirtschaftlichen Arbeitsmaschinen 31 des Futterernteprozesses 1 und die ihn beschreibende Futterernteprozesskette 13. Es liegt im Rahmen der Erfindung, dass jeder der landwirtschaftlichen Arbeitsmaschinen 31 selbstfahrend ausgeführt sein kann, wobei es auch im Rahmen der Erfindung liegt, dass die landwirtschaftlichen Arbeitsmaschinen 31 autonom, d.h. ohne Fahrer, den jeweiligen Prozessschritt 2 realisieren können.

Der Futterernteprozess 1 setzt sich folglich aus dem Zusammenspiel des zu erntenden Erntegutes 16 mit den die Futterernteprozesskette 13 bildenden Prozessschritten 2 und den jeweils diesen zugeordneten erforderlichen landwirtschaftlichen Arbeitsmaschinen 31 zusammen. Die landwirtschaftlichen Arbeitsmaschinen 31 umfassen hier nicht näher beschriebene Arbeitsorgane. Die Arbeitsweise der landwirtschaftlichen Arbeitsmaschinen 31 und der ihnen jeweils zugeordneten Arbeitsorgane können durch Änderung ihnen jeweils zugeordneter Arbeitsparameter 35 gesteuert werden.

Der Futterernteprozess 1 kann vorzugsweise mittels eines noch zu beschreibenden Assistenzsystems 32 optimiert werden, wobei das Assistenzsystem 32 eingerichtet ist einen Nutzer 33 bei der Optimierung der den Futterernteprozess 1 beschreibenden landwirtschaftlichen Arbeitsaufgabe 11 zu unterstützen, wobei die Optimierung des Futterernteprozesses 1 zumindest die Planung und/oder Durchführung der die Umsetzung der landwirtschaftlichen Arbeitsaufgabe 11 bewirkenden Futterernteprozesskette 13 umfasst, wobei die Futterernteprozesskette 13, wie beschrieben, eine Vielzahl von Prozessschritten 2 und eine Vielzahl landwirtschaftlicher Arbeitsmaschinen 31 umfasst, welche in einer vorgegebenen Reihenfolge die landwirtschaftliche Arbeitsaufgabe 11 abarbeiten.

Das Assistenzsystem 32 kann weiter eingerichtet sein nach vorgegebenen Strategien 34a..n die Durchführung der landwirtschaftlichen Arbeitsaufgabe 11 zu optimieren, wobei die vorgegebenen Strategien 34a..n in dem Assistenzsystem 32 hinterlegt sind und/oder an dieses übergeben werden und wobei das Assistenzsystem 32 mittels der vorgegebenen Strategien 34a..n optimierte Arbeitsparameter 35 und optimierte Prozessschritte 2 für die Futterernteprozesskette 13 und die sie bildenden landwirtschaftlichen Arbeitsmaschinen 31 generiert. Dabei sind die jeweils vorgegebenen Strategien 34a..n so strukturiert, dass sie die optimierten Arbeitsparameter 35 und die optimierten Prozessschritte 2 in Abhängigkeit von den Futterernteprozess 1 beschreibenden Qualitätsparametern 36 ermitteln und die Qualitätsparameter 36 strategieabhängig vorgegeben oder vorgebbar sind. Vorgegeben können besagte Qualitätsparameter 36 dadurch sein, dass jeder Strategie 34a..n ganz bestimmte Qualitätsparameter 36 zugeordnet sind. Vorgebbar können besagte Qualitätsparameter 36 auch dadurch sein, dass beispielsweise ein Nutzer 33 für eine bestimmte Strategie 34a..n ganz bestimmte Qualitätsparameter 36 festlegen kann.

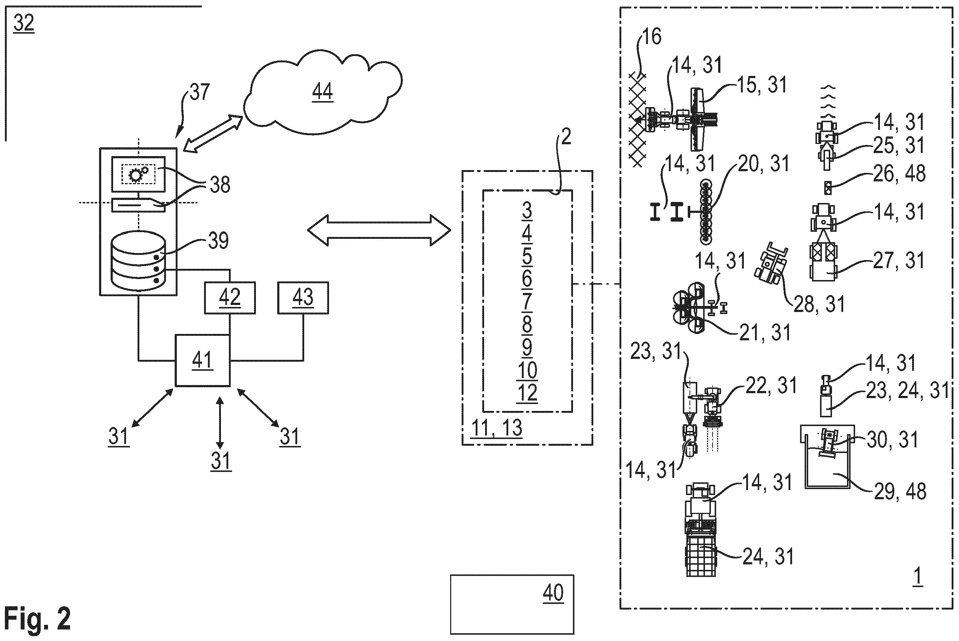

Figur 2 beschreibt nun Details des erfindungsgemäßen Assistenzsystems 32 näher. Das Assistenzsystem 32 umfasst zumindest eine Bedieneinrichtung 37, wobei die Bedieneinrichtung 37 von zumindest einer Eingabe- und Anzeigeeinheit 38 und einer Speicher- und Datenverarbeitungseinheit 39 gebildet wird. Die Bedieneinrichtung 37 kann einer oder mehreren der den Futterernteprozess 1 beschreibenden landwirtschaftlichen Arbeitsmaschinen 31 und/oder einer stationären Einheit 40 zugeordnet sein, wobei eine oder mehrere der Bedieneinrichtungen 37 eingerichtet sind untereinander Daten 41 auszutauschen. Die jeweilige Bedieneinrichtung 37 ist zudem so eingerichtet, dass sie Daten 41 aus einer der Speicher-und Datenverarbeitungseinrichtung 39 zugeordneten internen Datenquelle 42 und/oder einer oder mehreren externen Datenquellen 43 bezieht. In einer vorteilhaften Ausgestaltung kann die der jeweiligen Bedieneinrichtung 37 zugeordnete Speicher- und Datenverarbeitungseinheit 39 in Teilen oder vollständig einer Datencloud 44 zugeordnet sein. Wie bereits beschrieben umfasst der Futterernteprozess 1 einen oder mehrere Prozessschritte 2, wobei die Prozessschritte 2 ein oder mehrere der Prozessschritte 2 Entscheidung Erntestart 12, Mähen 3 des Erntegutes 16, Wenden 4 des Erntegutes 16,

Schwaden 5 des Erntegutes 16, Schwadernte mittels Feldhäcksler 6, Schwadernte mittels Ballenpresse 7, Schwadernte mittels Ladewagen 9, Aufsammeln und Abtransport von Erntegutballen 8 sowie die Einlagerung 10 von Erntegut 16 umfassen.

Der zu optimierende Futterernteprozess 1 wird schließlich wie bereits erläutert als landwirtschaftliche Arbeitsaufgabe 11 beschrieben, wobei die Beschreibung der landwirtschaftliche Arbeitsaufgabe 11 die erforderlichen Prozessschritte 2 und die Reihenfolge ihrer Abarbeitung umfasst. Die Reihenfolge der Abarbeitung der Prozessschritte 2 bildet zugleich die jeweilige Futterernteprozesskette 13. Je nach Art des zu optimierenden Futterernteprozesses 1 umfasst die die jeweilige landwirtschaftliche Arbeitsaufgabe 11 definierende Futterernteprozesskette 13 eine Vielzahl von landwirtschaftlichen Arbeitsmaschinen 31, etwa Mähwerke 15, Heuwerbungsmaschinen 20, vorzugsweise Heuwender, Schwader 21, Erntemaschinen, vorzugsweise Feldhäcksler 22, Ballenpresse 25 und/oder Ladewagen 24, Transportfahrzeuge, vorzugsweise Traktoren 14, Transportwagen 23, Pritschenwagen 27, Hubstapler 28 und Verdichtungsfahrzeuge 30. Zudem umfasst die Futterernteprozesskette 13 die Einlagerung 10 des Erntegutes 16, wobei die Einlagerung 10 in Form von Erntegutballen 26 oder die Einlagerung 10 in Silos 29 erfolgen kann.

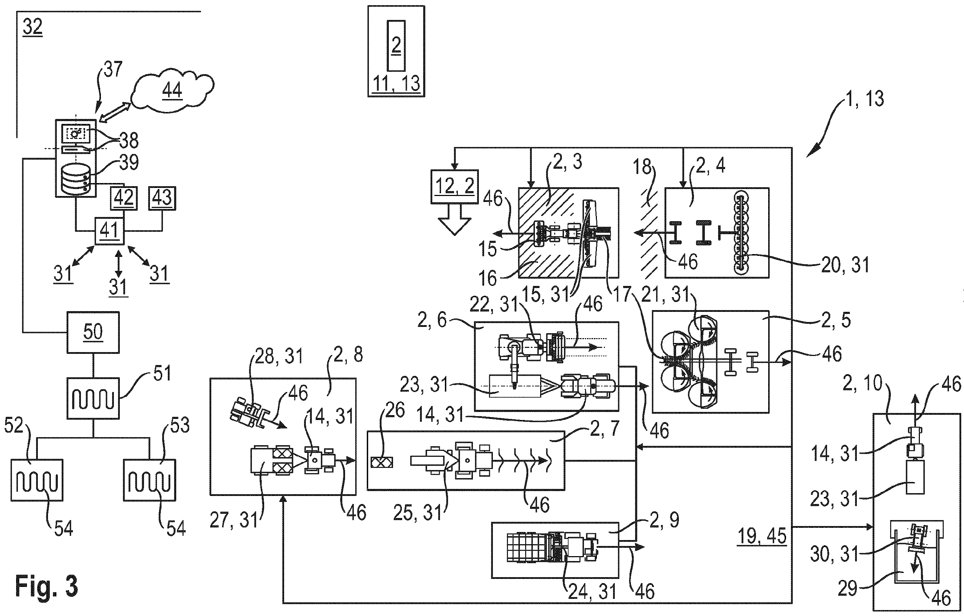

Gemäß Figur 3 kann ein typischer Futterernteprozess 1 so strukturiert sein, dass von dem Assistenzsystem 32 zunächst ein optimaler Zeitpunkt für den Erntestart 12 bestimmt wird, wobei der Erntestart 12 den ersten, die jeweilige Futterernteprozesskette 13 definierende Prozessschritt 2 bildet. Der eigentliche Prozess des Erntens beginnt mit dem Prozessschritt 2 Mähen 3. Wie bereits beschrieben können die Mähwerke 15 das Erntegut 16 in einem oder mehreren Erntegutschwaden 17 oder in Breitablage 18 auf dem Feldboden 19 ablegen. Bei Breitablage 18 kann sich als nächster Proessschritt 2 das Wenden 4 anschließen. Dabei wird das Erntegut 16 aufgewirbelt und wieder in Breitablage 18 abgelegt, sodass das Erntegut 16 mehr oder weniger gleichmäßig Wind und Sonne ausgesetzt wird, um die Trocknung des Erntegutes 16 zu beschleunigen. Wird das Erntegut 16 in Breitablage 18 auf dem Feldboden 19 abgelegt muss sich als weitere Prozesschritt 2 das Schwaden 5 anschließen. Wie bereits beschrieben hängt es von der Art des Schaders 21 ab, ob ein oder mehrere Erntegutschwaden 17 auf dem Feldboden 19 abgelegt werden. Unabhängig davon, auf welche Weise das Erntegut 16 zu einem Erntegutschwad 17 geformt wurde erfolgt schließlich dessen Ernte, wobei hier die Prozessschritte 2 Schwadernte 6 mittels Feldhäcksler 22, Schwadernte 7 mittels Ballenpresse 25 und Schwadernte 9 mittels Ladewagen 24 unterschieden werden. An den Prozessschritt 2 Schwadernte 7 mittels Ballenpresse 25 schließt sich der Prozessschritt 2 Aufsammeln und Abtransport der Erntegutballen 8 an, wobei hier in der Regel Hubstabler 28 und zugehörigem Traktor-Pritschenwagen - Gespann 14, 27 zum Aufsammeln und Abtransport der Erntegutballen 26 zum Einsatz kommen. Ein weiterer Prozessschritt 2 der erfindungsgemäßen Futterernteprozesskette 13 kann die Einlagerung 10 des Erntegutes 16 in einem Silo 29 sein, wobei hier typischer Weise ein oder mehrere Verdichtungsfahrzeug 30 und zugehörige Traktor - Transportwagen - Gespanne 14, 23 zum Einsatz kommen.

Jede in den durch die landwirtschaftliche Arbeitsaufgabe 11 definierte Futterernteprozesskette 13 integrierte landwirtschaftliche Arbeitsmaschine 31 muss auf dem jeweils zu bearbeitenden Territorium 45 eine noch näher zu erläuternde Fahrroute 46 zurücklegen. Je nach Struktur der Futterernteprozesskette 13 können die integrierten landwirtschaftlichen Arbeitsmaschinen 31 gleichzeitig oder zeitlich versetzt auf dem zu bearbeitenden Territorium 45 zum Einsatz kommen. Zudem müssen die landwirtschaftlichen Arbeitsmaschinen 31 in Abhängigkeit von dem jeweiligen Prozessschritt 2 in einer bestimmten Reihenfolge eingesetzt werden und dürfen sich zudem nicht gegenseitig behindern oder gar miteinander kollidieren. Um all diese Randbedingungen zu erfüllen kommt das im Folgenden detailliert beschriebene erfindungsgemäße Routenplanungssystem 50 zur Anwendung. Das Routenplanungssystem 50 ist eingerichtet, den Routenplan 51 für eine Vielzahl von landwirtschaftlichen Arbeitsmaschinen 31 der Futterernteprozesskette 13 zu erstellen, welche in einer vorgegebenen Reihenfolge einen Futterernteprozess 1 durchführen, wobei der Futterernteprozess 1 aufeinanderfolgende Prozessschritte 2 umfasst und jeder Prozessschritt 2 von einer Anzahl der Vielzahl von landwirtschaftlichen Arbeitsmaschinen 31 durchgeführt wird. Das erfindungsgemäße Routenplanungssystem 50 ist weiter so eingerichtet, dass es für die landwirtschaftlichen Arbeitsmaschinen 31 der Futterernteprozesskette 13 einen gemeinsamen Routenplan 52 und/oder für jede landwirtschaftliche Arbeitsmaschine 31 einen individualisierten Routenplan 53 generiert. Jeder der individualisierten oder gemeinsamen Routenpläne 52, 53 umfasst eine Fahrtroute 54 oder eine Vielzahl von Fahrtrouten 54.

Das Routenplanungssystem 50 ist dem Assistenzsystem 32 zugeordnet, im einfachsten Fall ist es der Speicher- und Datenverarbeitungseinheit 39 der Bedieneinrichtung 37 zugeordnet, wobei eine Bedieneinrichtung 37 jeder landwirtschaftlichen Arbeitsmaschine 31 zugeordnet ist. Denkbar wäre auch, dass das Routenplanungssystem 50 einer zentralen Speicher- und Datenverarbeitungseinrichtung 39 zugeordnet ist und den in die jeweilige Futterernteprozesskette 13 integrierten landwirtschaftlichen Arbeitsmaschinen 31 der gemeinsame Routenplan 52 und/oder die individualisierten Routenpläne 53 übermittelt werden. Es liegt im Rahmen der Erfindung, dass die Speicher- und Datenverarbeitungseinheit 39 auch einer Datencloud 44 zugeordnet sein kann.

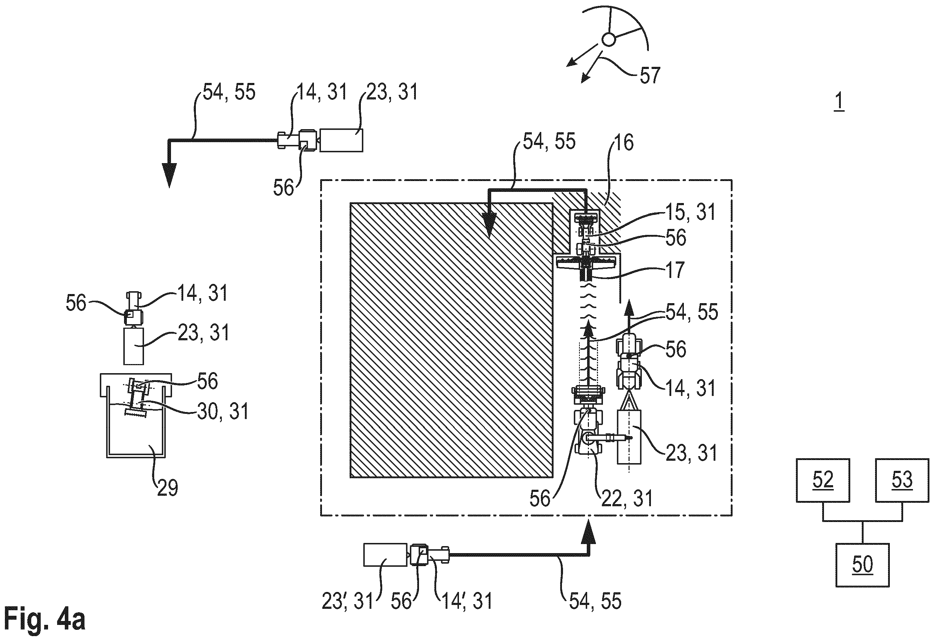

Zur Erläuterung des generellen Funktionsprinzips des erfindungsgemäßen Routenplanungssystems 50 wird in Figur 4a beispielhaft das Zusammenarbeiten einer Auswahl von landwirtschaftlichen Arbeitsmaschinen 31 auf einem zu bearbeitenden Territorium 45 erläutert. Im dargestellten Beispiel wird das Erntegut 16 von einem Mähwerk 15 geerntet und in einem Erntegutschwad 17 abgelegt. Das ein- oder mehrteilig ausgeführte Mähwerke 15 bewegt sich autonom oder von einem Traktor getragen entlang einer Fahrtroute 54. Der abgelegte Erntegutschwad 17 wird nachfolgend von einem Feldhäcksler 22 aufgenommen, zerkleinert und schließlich an den von einem Traktor 14 gezogenen Transportwagen 23 übergeben. Sowohl der Feldhäcksler 22 als auch das Traktor-Transportwagen-Gespann 14, 23 bewegen sich auf Fahrtrouten 54. Nachdem der Transportbehälter 23 vollständig befüllt ist bewegt er sich auf einer weiteren Fahrtroute 54 beispielsweise zu einem Silo 29. Zugleich bewegt sich ein weiteres Transportwagen-Gespann 14`, 23' auf einer Fahrtroute 54 zum Feldhäcksler 22. Im Idealfall erfolgt der Transportwagen-Gespann 14`, 23' Wechsel so, dass der Ernteprozess nicht unterbrochen werden muss. Jede der exemplarisch dargestellten Fahrrouten 54 bilden für die jeweilige landwirtschaftliche Arbeitsmaschine 31 eine individualisierte Fahrroute 55 mit individuell auf die jeweilige landwirtschaftliche Arbeitsmaschine 31 zugeschnittenen Eigenschaften. Jede dieser individualisierten Fahrtrouten 55 wird von dem Routenplanungssystem 50 in dem individualisierten Routenplan 53 und/oder dem gemeinsamen Routenplan 52 generiert und abgelegt. Im einfachsten Fall verfügen sämtliche landwirtschaftliche Arbeitsmaschinen 31 über Datenübertragungseinrichtung 56 mittels derer Daten empfangen und gesendet werden können, sodass Daten zwischen den beschriebenen Bedieneinrichtungen 37 (Fig. 3) ausgetauscht werden können. Die Datenübertragungseinrichtungen 56 können in an sich bekannten Weise Positionsdaten, etwa GPS Daten 57 empfangen, sodass die genaue Position einer in den jeweiligen Futterernteprozess 1 integrierten landwirtschaftlichen Arbeitsmaschine 31 bekannt ist und gesteuert werden kann.

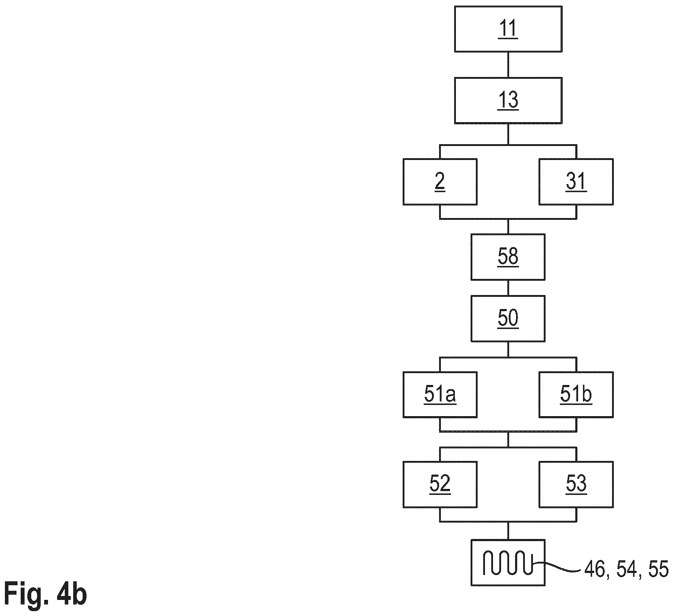

Fig. 4b beschreibt nun Details des erfindungsgemäßen Routenplanungssystems 50 näher. Wie bereits beschrieben ist ein Assistenzsystem 32 vorgesehen, welches aus einer definierten landwirtschaftlichen Arbeitsaufgabe 11 eine Futterernteprozesskette 13 ableitet. Die Futterernteprozesskette 13 umfasst, wie ebenfalls bereits beschrieben, eine Vielzahl von Prozessschritten 2 und eine Vielzahl landwirtschaftlicher Arbeitsmaschinen 31, welche in einer vorgegebenen Reihenfolge die landwirtschaftliche Arbeitsaufgabe 11 abarbeiten. Die von dem Assistenzsystem 32 generierten, die Futterernteprozesskette 13 beschreibenden Informationen 58 werden sodann an das Routenplanungssystem 50 übergeben. Das Routenplanungssystem 50 ist zunächst so beschaffen, dass es einen Routenplan 51a für einen Prozessschritt 2 und/oder einen Routenplan 51b für mehrere oder alle Prozessschritte 2 erstellt. Jeder der Routenpläne 51a, 51b umfasst für jedes den jeweiligen Prozessschritt 2 oder die jeweiligen Prozessschritte 2 ausführenden landwirtschaftlichen Arbeitsmaschinen 31, wie beschrieben, entweder einen individualisierten Routenplan 53 für jede landwirtschaftliche Arbeitsmaschine 31 oder einen gemeinsamen Routenplan 52, der jeweils für mehrere landwirtschaftliche Arbeitsmaschinen 31 einen gemeinsamen Routenplan umfasst. Jeder Routenplan 51a, 51b und 52, 53 umfasst für die jeweilige landwirtschaftliche Arbeitsmaschine 31 eine oder mehrere Fahrtrouten 46, 54.

Das Routenplanungssystem 50 ist weiter so beschaffen, dass die auf einen Prozessschritt 2 bezogenen Routenpläne 51a, 51b und die auf die gesamte Futterernteprozesskette 13 bezogenen Routenpläne 52, 53 Fahrtrouten 46, 54 umfassen, wobei jeder landwirtschaftlichen Arbeitsmaschine 31 eines Prozessschrittes 2 oder der gesamten Ernteprozesskette 13 eine individualisierte Fahrtroute 55 zugeordnet ist.

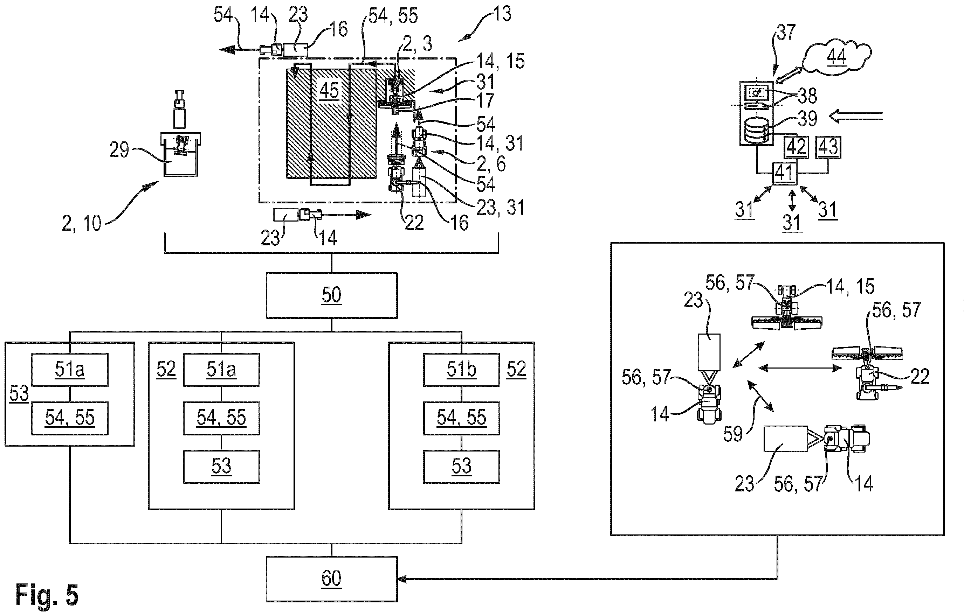

Fig.5 zeigt nun ausgehend von dem Beispiel nach Fig. 4a die Erstellung der verschiedenen Routenpläne 51a, b, 52, 53 im Detail. Die beispielhaft dargestellte Futterernteprozesskette 13 umfasst drei Prozessschritte 2, nämlich das Mähen 3, das Schwadernten 6 mittel Feldhäcksler 22 und das Einlagern 10 des Erntegutes 16.

In einer ersten Ausgestaltungsvariante ist vorgesehen, dass die dargestellten Prozessschritte 2 Mähen 3, Schwadernte 6 und Einlagern 10 nacheinander und jeder Prozessschritt 2 innerhalb der Futterernteprozesskette 13 für sich genommen abgearbeitet wird. Für den Prozessschritt 2 Mähen 3 generiert das Routenplanungssystem 50 einen Routenplan 51a ausschließlich für die Traktor-Mähwerkombination 14, 15, wobei der Routenplan 51a eine Fahrtroute 54 für die Traktor-Mähwerkombination 14, 15 umfasst, die zugleich die individualisierte Fahrtroute 55 bildet, da der Routenplan 51a nur für den Prozessschritt 2 Mähen 3 generiert wird. Da der Routenplan 51a in dieser Ausgestaltungsvariante für eine einzige landwirtschaftliche Arbeitsmaschine 31, hier die Traktor-Mähwerkombination 14, 15 erstellt wird und auf einem einzigen Prozessschritt 2 bezogen ist bildet dieser Routenplan 51a zugleich den individualisierten Routenplan 53 für die einzige landwirtschaftliche Arbeitsmaschine 31.

Für den Prozessschritt 2 Schwadernte 6 generiert das Routenplanungssystem 50 ebenfalls einen Routenplan 51a für einen einzigen Prozessschritt 2, jedoch mit dem Unterschied, dass der Routenplan 51a jeweils für den Feldhäcksler 22 und das Traktor-Transportwagen-Gespann 14, 23 separate Fahrtrouten 54 umfasst, die einerseits das Agieren auf dem zu bearbeitenden Territorium 45 als auch den Abtransport des Erntegutes 16 sowie das Hinzutreten eines leeren Transportwagens 23a in die Futterernteprozesskette 13 einschließt. Die Fahrrouten 54 dieses Routenplans 51a müssen einerseits so aufeinander abgestimmt sein, dass der Feldhäcksler 22 den Erntegutschwad 17 aufnehmen und das Erntegut 16 sicher an den Transportwagen 23 übergegen kann. Andererseits müssen die Fahrtrouten 54 auch so aufeinander abgestimmt sein, dass die gemeinsam auf dem zu bearbeitenden Territorium 45 agierenden landwirtschaftlichen Arbeitsmaschinen 31 bei der Überladung des Erntegutes 16 koordiniert zusammenarbeiten, sich nicht gegenseitig behindern oder miteinander kollidieren. Auch beim Einsatz mehrere landwirtschaftlichen Arbeitsmaschine 31 in einem einzigen Prozessschritt 2 generiert das Routenplanungssystem 50 für jede landwirtschaftliche Arbeitsmaschine eine individualisierten Fahrtroute 55. Dies führt zunächst dazu, dass jeder in den Prozessschritt 2 integrierten landwirtschaftlichen Arbeitsmaschine 31 ein individualisierter Routenplan 53 zugeordnet ist. Jedoch werden diese individualisierten Routenpläne 53 aus einem gemeinsamen Routenplan 52 abgeleitet, welche die oben genannten Randbedienungen erfüllt.

Vor dem Hintergrund, dass der Prozessschritt 2 Einlagern 10 in der Regel nicht im Bereich des zu bearbeitenden Territoriums 45 stattfindet, wird die Erstellung eines Routenplanes 51a für den einzigen Prozessschritt 2 Einlagern 10, welcher neben der Einlagerung des Erntegutes 16 in einem Silo 29 auch die nicht näher beschriebene Lagerung von Erntegutballen 26 umfassen kann, folgt aber wegen der mehreren in den Prozessschritt involvierten landwirtschaftlichen Arbeitsmaschinen 31 dem zuvor für die Kombination aus Feldhäcksler 22 und Traktor-Transportwagen-Gespann 14, 23 beschriebenen Planung der gemeinsamen und individualisierten Routenpläne 52, 53.

In einer weiteren Ausgestaltungsvariante ist vorgesehen, dass verschiedene Prozessschritte 2 gleichzeitig auf einem zu bearbeitenden Territorium 45 abgearbeitet werden. Für das hier beispielhaft beschriebene Ausführungsbeispiel werden nun die Prozessschritte 2 Mähen 3, Schwadernte 6 und Einlagern 10 unmittelbar aufeinanderfolgend abgearbeitet, sodass die involvierten landwirtschaftlichen Arbeitsmaschinen 31 gleichzeitig auf dem zu bearbeitenden Territorium 45 agieren. In diesem Fall wird nun von dem Routenplanungssystem 50 ein Routenplan 51b generiert, der die zuvor beschriebenen Fahrtrouten 54, 55 in einem Prozessschritte-übergreifenden Routenplan 51b zusammenfasst. Die von dem Prozessschritte-übergreifenden Routenplan 51b zu beschreibende Futterernteprozesskette 13 startet in dem beispielhaft beschriebenen Anwendungsfall mit dem Mähen 3 des Erntegutes 16 und dessen Ablage in einem Erntegutschwad 17, welches im nachfolgenden Prozessschritt 2 von dem Feldhäcksler 22 aufgenommen, zerkleinert und an den von einem Traktor 14 gezogenen Transportwagen 23 übergeben wird. Ein befüllter Transportwagen 23 wird sodann im hier beschriebenen Anwendungsfall zu einem Silo gefahren und dort entleert. Zugleich wird ein noch leerer Traktor-gezogene Transportwagen 23a zum Feldhäcksler 22 gefahren. Mithin agieren in einem solchen Anwendungsfall gleichzeitig vier landwirtschaftliche Arbeitsmaschinen 31, das Traktor-gezogene Mähwerk 15, der Feldhäcksler 22, der traktorgezogene Transportwagen 23 und der traktorgezogene leere Transportwagen 23`, auf dem zu bearbeitenden Territorium 45.

Wie in der zuvor beschriebenen Ausgestaltungsvariante müssen auch die Fahrrouten 54 dieses Routenplans 51b einerseits so aufeinander abgestimmt sein, dass der Feldhäcksler 22 den Erntegutschwad 17 aufnehmen und das Erntegut 16 sicher an den Transportwagen 23 übergegen kann. Andererseits müssen die Fahrtrouten 54 auch so aufeinander abgestimmt sein, dass die gemeinsam auf dem zu bearbeitenden Territorium 45 agierenden landwirtschaftlichen Erntemaschinen 31 bei der Aufnahme und Überladung des Erntegutes 16 koordiniert zusammenarbeiten, sich nicht gegenseitig behindern oder miteinander kollidieren. Auch beim Einsatz mehrere landwirtschaftlichen Arbeitsmaschine 31 in mehreren gleichzeitig abgearbeitete Prozessschritten 2 generiert das Routenplanungssystem 50 für jede landwirtschaftliche Arbeitsmaschine eine individualisierte Fahrtroute 55. Dies führt zunächst dazu, dass jeder in den Prozessschritt 2 integrierten landwirtschaftlichen Arbeitsmaschine 31 ein individualisierter Routenplan 53 zugeordnet ist. Jedoch werden diese individualisierten Routenpläne 53 aus einem gemeinsamen Routenplan 52 abgeleitet, welche die oben genannten Randbedienungen erfüllt.

Das Prinzip der Planung von Fahrtrouten 54, 55 ist in der DE 10 2006 015 204 A1 hinlänglich beschrieben, sodass durch Bezugnahme die Offenbarung der DE 10 2006 015 204 A1 vollumfänglich in den Offenbarungsgehalt der hier vorliegenden Beschreibung übernommen wird.

Damit nun die von dem Routenplanungssystem 50 generierten Routenpläne 51a, 51b so umgesetzt werden können, dass die gemeinsam auf dem zu bearbeitenden Territorium 45 agierenden landwirtschaftlichen Erntemaschinen 31 bei der Aufnahme und Überladung des Erntegutes 16, bei der Generierung des Erntegutschwads, beim Abtransport des Erntegutes 16 und der Aufnahme von leeren Transportwagen 23' in die Futterernteprozesskette 13 koordiniert zusammenarbeiten, sich nicht gegenseitig behindern oder miteinander kollidieren, muss sichergestellt werden, dass die auf dem zu bearbeitenden Territorium 45 agierenden landwirtschaftlichen Arbeitsmaschinen 31 untereinander im Datenaustausch 59 stehen. Im einfachsten Fall tauschen die landwirtschaftlichen Arbeitsmaschinen 31 untereinander ihre mittels der Datenübertragungseinrichtung 56 generierten GPS-Daten 57 aus. Basierend auf diesem Datenaustausch 59 erfolgt eine dynamische Anpassung 60 der verschiedensten Routenpläne 51a, 51b, 52, 53 damit die in den jeweiligen Prozessschritt und die gesamte Futterernteprozesskette 13 involvierten landwirtschaftlichen Arbeitsmaschinen 31 über das Auftreten einer Situation, die das Abarbeiten der geplante Fahrtroute 54, 55 unmöglich macht oder Kollisionsrisiken von dem Routenplanungssystem 50 erkannt werden und das Routenplanungssystem 50 sodann dynamisch alle geplanten Fahrrouten 54, 55 und der diese Fahrrouten 54, 55 umfassenden Routenpläne 51a, 51b, 52, 53 anpasst.

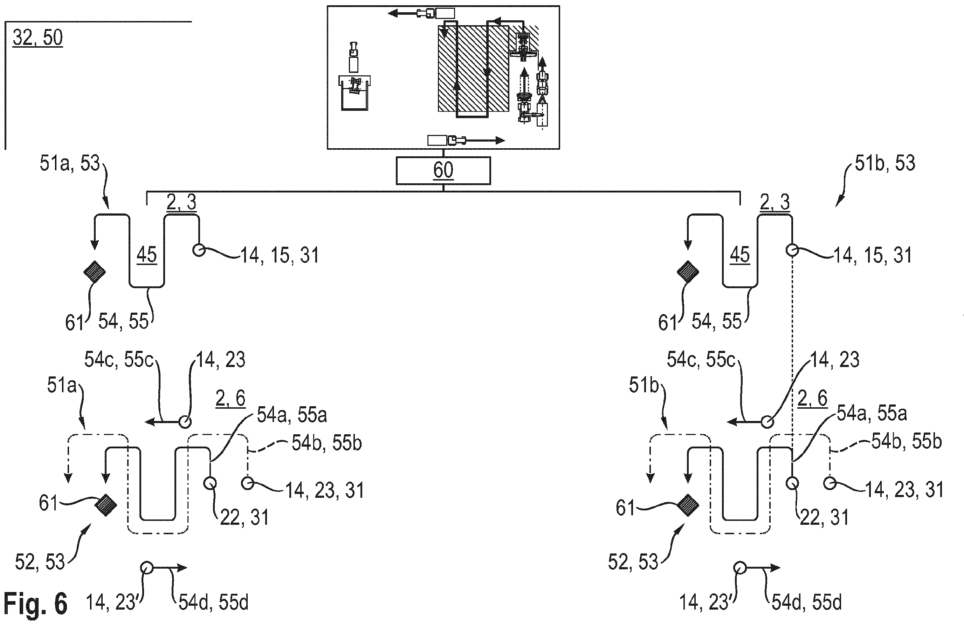

Fig. 6 beschreibt die Struktur der dynamischen Anpassung 60 der verschiedensten Routenpläne 51a, 51b, 52, 53 detaillierter. In der Ausgestaltungsvariante, dass nur die Traktor-Mähwerk-Kombination 14, 15 als einzige landwirtschaftliche Arbeitsmaschine 31 auf dem zu bearbeitenden Territorium 45 einen einzige Prozessschritt 2, hier Mähen 3, abarbeitet (linke obere Darstellung in Fig. 6), umfasst der Routenplan 51a nur eine einzige Fahrtroute 54, welche zugleich die individualisierte Fahrtroute 55 bildet. In diesem Fall beschränkt sich die dynamische Anpassung 60 des Routenplans 51a, der zugleich der individualisierte Routenplan 53 ist, und der zugehörigen Fahrroute 54, 55 darauf, dass dynamische Anpassungen 60 aufgrund von Hindernissen 61 vorgenommen werden müssen oder aufgrund dessen, dass die landwirtschaftliche Arbeitsmaschine 31 selbst ausfällt oder das Abarbeiten des Routenplans 51a unterbricht.

In der Ausgestaltungsvariante, dass der Feldhäcksler 22 und die ihm zugeordnete Traktor-Transportwagen-Kombination 14, 23 als landwirtschaftliche Arbeitsmaschinen 31 auf dem zu bearbeitenden Territorium 45 einen einzige Prozessschritt 2, hier Schwadernte 6 mittels Feldhäcksler 22, abarbeiten (linke untere Darstellung in Fig. 6), umfasst der Routenplan 51a eine Fahrtroute 54a für den Feldhäcksler 22 und eine Fahrtroute 54b für das Traktor-Transportwagen-Gespann 14, 23, welche zugleich die jeweils individualisierten Fahrtrouten 55a, b bilden. Zudem umfasst der Routenplan für das Traktor-Transportwagen-Gespann weitere Fahrtrouen 54c und 54d, welche den Abtransport des befüllten Transportwagens 23 und das Hinzufügen eines leeren Transportwagen 23' in den einzigen Prozessschritt 2 abbilden, wobei die weiteren Fahrrouten 54c, 54d zugleich für die jeweiligen individualisierten Fahrtrouten 55c und 55d bilden. In dieser Ausgestaltungsvariante ist einerseits jeder in den Prozessschritt 2 Schwadernte 6 mittels Feldhäcksler 22 integrierten landwirtschaftlichen Arbeitsmaschine 31 ein individualisierter Routenplan 53 zugeordnet. Zugleich sind die einzelnen Routenpläne 53 in einem gemeinsamen Routenplan 52 in dem Routenplanungssystem 50 zusammengefasst. Wie bereits beschrieben müssen die Fahrrouten 54a-d dieses Routenplans 51a so aufeinander abgestimmt sein, dass der Feldhäcksler 22 den Erntegutschwad 17 aufnehmen und das Erntegut 16 sicher an den Transportwagen 23 übergegen kann. Andererseits müssen die Fahrtrouten 54a-d auch so aufeinander abgestimmt sein, dass die gemeinsam auf dem zu bearbeitenden Territorium 45 agierenden landwirtschaftlichen Arbeitsmaschinen 31 bei der Überladung des Erntegutes 16 koordiniert zusammenarbeiten, sich nicht gegenseitig behindern oder miteinander kollidieren. Auch in diesem Anwendungsfall müssen Hindernisse 61 und der Ausfall von landwirtschaftlichen Arbeitsmaschinen 31 oder Arbeitsunterbrechungen berücksichtigt werden. Daher unterliegt die dynamische Anpassung 60 der Routenpläne 51a, 52, 53 und der ihnen jeweils zugeordneten Fahrtrouten 54a-d, 55a-d deutlich komplexeren Zusammenhängen. Da das Routenplanungssystem 50 jedoch so beschaffen ist, dass es via Datenaustausch 59 die die Positionen der involvierten landwirtschaftlichen Arbeitsmaschinen beschreibenden GPS-Daten und zusätzlich die beschriebenen Informationen 58 empfängt, kann das Routenplanungssystem dynamisch und hochflexibel die Routenpläne 51a, 52, 53 und die ihnen jeweils zugeordneten Fahrtrouten 54a-d, 55a-d anpassen.

In einer weiteren Ausgestaltungsvariante ist, wie bereits beschrieben, vorgesehen, dass verschiedene Prozessschritte 2 gleichzeitig auf dem zu bearbeitenden Territorium 45 abgearbeitet werden. Für das hier beispielhaft beschriebene Ausführungsbeispiel werden nun die in der linken Darstellung der Fig. 6 beschriebenen Prozessschritte 2 Mähen 3 und Schwadernte 6 unmittelbar aufeinanderfolgend abgearbeitet, sodass die involvierten landwirtschaftlichen Arbeitsmaschinen 31 gleichzeitig auf dem zu bearbeitenden Territorium 45 agieren. In diesem Fall wird nun von dem Routenplanungssystem 50 ein Routenplan 51b generiert, der die zuvor beschriebenen Fahrtrouten 54, 54a-d und 55, 55a - d in einem Prozessschritte-übergreifenden Routenplan 51b zusammenfasst.

Die von dem Prozessschritte-übergreifenden Routenplan 51b zu beschreibende Futterernteprozesskette 13 startet in dem beispielhaft beschriebenen Anwendungsfall mit dem Mähen 3 des Erntegutes 16 und dessen Ablage in einem Erntegutschwad 17, welches im nachfolgenden Prozessschritt 2 von dem Feldhäcksler 22 aufgenommen, zerkleinert und an den von einem Traktor 14 gezogenen Transportwagen 23 übergeben wird. Ein befüllter Transportwagen 23 wird sodann im hier beschriebenen Anwendungsfall zu einem Silo gefahren und dort entleert. Zugleich wird ein noch leerer Traktor-gezogene Transportwagen 23' zum Feldhäcksler 22 gefahren. Mithin agieren in einem solchen Anwendungsfall gleichzeitig vier landwirtschaftliche Arbeitsmaschinen 31, das Traktor-gezogene Mähwerk 15, der Feldhäcksler 22, der traktorgezogene Transportwagen 23 und der traktorgezogene leere Transportwagen 23`, auf dem zu bearbeitenden Territorium 45.

Auch in diesem Anwendungsfall müssen die Fahrtrouten 54, 54a-d so aufeinander abgestimmt sein, dass die gemeinsam auf dem zu bearbeitenden Territorium 45 agierenden landwirtschaftlichen Arbeitsmaschinen 31 koordiniert zusammenarbeiten, sich nicht gegenseitig behindern oder miteinander kollidieren. Zudem müssen Hindernisse 61 und der Ausfall von landwirtschaftlichen Arbeitsmaschinen 31 oder Arbeitsunterbrechungen berücksichtigt werden. Daher unterliegt die dynamische Anpassung 60 der Routenpläne 51b, 52, 53 und der ihnen jeweils zugeordneten Fahrtrouten 54, 54a-d, 55, 55a-d noch komplexeren Zusammenhängen. Da das Routenplanungssystem 50 jedoch so beschaffen ist, dass es via Datenaustausch 59 die die Positionen der involvierten landwirtschaftlichen Arbeitsmaschinen 31 beschreibenden GPS-Daten 57 und zusätzlich die beschriebenen Informationen 58 empfängt, kann das Routenplanungssystem dynamisch und hochflexibel die Routenpläne 51b, 52, 53 und die ihnen jeweils zugeordneten Fahrtrouten 54, 54a-d, 55, 55a-d anpassen.

### Bezugszeichenliste:

| | | | |
|---|---|---|---|
| 1 | Futterernteprozess | 34a..n | vorgebbare Strategie |
| 2 | Prozessschritt | 35 | Arbeitsparameter |
| 3 | Mähen | 36 | Qualitätsparameter |
| 4 | Wenden/Zetten | 37 | Bedieneinrichtung |
| 5 | Schwaden | 38 | Eingabe- und Anzeigeeinheit |
| 6 | Schwadernte mittels Feldhäcksler | 39 | Speicher- und DV-Einheit |
| 7 | Schwadernte mittels Ballenpresse | 40 | stationäre Einheit |
| 8 | Aufsammeln und Abtransport der Ballen | 41 | Daten |
| 9 | Schwadernte mittels Ladewagen | 42 | interne Datenquelle |
| 10 | Einlagerung Erntegut | 43 | externe Datenquelle |
| 11 | landwirtschaftliche Arbeitsaufgabe | 44 | Datencloud |
| 12 | Erntestart | 45 | zu bearbeitendes Territorium |
| 13 | Futterernteprozesskette | 46 | Fahrtroute |
| 14 | Traktor | 47 | |
| 15 | Mähwerk | 48 | |
| 16 | Erntegut | 49 | |
| 17 | Erntegutschwad | 50 | Routenplanungssystem |
| 18 | Breitablage | 51a,b | Routenplan |
| 19 | Feldboden | 52 | gemeinsamer Routenplan |
| 20 | Heuwerbungsmaschine | 53 | individualisierter Routenplan |
| 21 | Schwader | 54 | Fahrtroute |
| 22 | Feldhäcksler | 55 | individualisierte Fahrtroute |
| 23 | Transportwagen | 56 | Datenübertragungseinrichtung |
| 24 | Ladewagen | 57 | GPS-Daten |
| 25 | Ballenpresse | 58 | Informationen |
| 26 | Erntegutballen | 59 | Datenaustausch |
| 27 | Pritschenwagen | 60 | dynamische Anpassung |
| 28 | Hubstapler | 61 | Hindernis |
| 29 | Silo | 62 | |
| 30 | Verdichtungsfahrzeug | 63 | |
| 31 | landwirtschaftliche Arbeitsmaschine | 64 | |
| 32 | Assistenzsystem | 65 | |
| 33 | Nutzer | | |

## Patentansprüche

1. Routenplanungssystem (50) vorgesehen und eingerichtet, den Routenplan (51a,b) einer Futterernteprozesskette (13) zu erstellen, wobei die Futterernteprozesskette (13) eine Vielzahl landwirtschaftlicher Arbeitsmaschinen (31) umfasst, welche in einer vorgegebenen Reihenfolge einen Futterernteprozess (1) durchführen, wobei der Futterernteprozess (1) aufeinanderfolgende Prozessschritte (2) umfasst und jeder Prozessschritt (2) von einer Anzahl der Vielzahl von landwirtschaftlichen Arbeitsmaschinen (31) durchgeführt wird,
**dadurch gekennzeichnet, dass**
das Routenplanungssystem (50) weiter vorgesehen und eingerichtet ist, für die landwirtschaftlichen Arbeitsmaschinen (31) der Futterernteprozesskette (13) einen gemeinsamen Routenplan (51a, 51b, 52) und/oder für jede landwirtschaftliche Arbeitsmaschine (31) einen individualisierten Routenplan (51a, 51b, 53) zu generieren.

2. Routenplanungssystem (50) nach Anspruch 1,
**dadurch gekennzeichnet, dass**
das Routenplanungssystem (50) weiter vorgesehen und eingerichtet ist, den gemeinsamen Routenplan (51a, 51b, 52) und den für jede landwirtschaftliche Arbeitsmaschine (31) generierten individualisierten Routenplan (51a, 51b, 53) dynamische anzupassen.

3. Routenplanungssystem (50) nach einem der vorhergehenden Ansprüche,
**dadurch gekennzeichnet, dass**
das Routenplanungssystem (50) weiter vorgesehen und eingerichtet ist, für die landwirtschaftlichen Arbeitsmaschinen (31) eines Prozessschritts (2) der Futterernteprozesskette (13) einen gemeinsamen Routenplan (51a, 52) und/oder für jede landwirtschaftliche Arbeitsmaschine (31) einen individualisierten Routenplan (51a, 53) zu generieren.

4. Routenplanungssystem (50) nach einem der vorhergehenden Ansprüche,
**dadurch gekennzeichnet, dass**
das Routenplanungssystem (50) weiter vorgesehen und eingerichtet ist, für die landwirtschaftlichen Arbeitsmaschinen (31) aller Prozessschritte (2) der Futterernteprozesskette (13) einen gemeinsamen Routenplan (51b, 52) und/oder für jede landwirtschaftliche Arbeitsmaschine (31) einen individualisierten Routenplan (51b, 53) zu generieren.

5. Routenplanungssystem (50) nach einem der vorhergehenden Ansprüche,
**dadurch gekennzeichnet, dass**
die jeweiligen gemeinsamen Routenpläne (51b, 52) und die jeweiligen individualisierten Routenpläne (53) Fahrtrouten (46, 54) umfassen, wobei jeder landwirtschaftlichen Arbeitsmaschine (31) in dem jeweiligen Routenplan (51a,b, 52, 53) eine individualisierte Fahrtroute (55) zugeordnet ist.

6. Routenplanungssystem (50) nach einem der vorhergehenden Ansprüche,
**dadurch gekennzeichnet, dass**
die Futterernteprozesskette (13) von einem Assistenzsystem (32) generiert und an das Routenplanungssystem (50) übergeben wird, wobei das Assistenzsystem (32) die Futterernteprozesskette (13) aus einer an das Assistenzsystem (32) übergebenen Beschreibung einer landwirtschaftlichen Arbeitsaufgabe (11) erstellt.

7. Routenplanungssystem (50) nach einem der vorhergehenden Ansprüche,
**dadurch gekennzeichnet, dass**
der zu optimierende Futterernteprozess (1) als landwirtschaftliche Arbeitsaufgabe (11) beschrieben wird und die Beschreibung der landwirtschaftliche Arbeitsaufgabe (11) die erforderlichen Prozessschritte (2) und die Reihenfolge ihrer Abarbeitung umfasst, wobei die Reihenfolge der Abarbeitung der Prozessschritte (2) die jeweilige Futterernteprozesskette (13) bildet und wobei das Routenplanungssystem (50) vorgesehen und eingerichtet ist einen Routenplan (51a) für einen Prozessschritt (2) und/oder einen Routenplan (51b) für mehrere oder alle Prozessschritte (2) zu erstellen.

8. Routenplanungssystem (50) nach einem der vorhergehenden Ansprüche,
**dadurch gekennzeichnet, dass**
die auf einem zu bearbeitenden Territorium (45) aktiven landwirtschaftlichen Arbeitsmaschinen (31) jeweils über eine Datenübertragungseinrichtung (56) verfügen und die Datenübertragungseinrichtungen (56) vorgesehen und eingerichtet sind einen Datenaustausch (59) zwischen den landwirtschaftlichen Arbeitsmaschinen (31) und dem Routenplanungssystem (50) zu ermöglichen.
